# EUROPÄISCHE PATENTSCHRIFT

(11) **EP 1 504 641 B1**
(45) Veröffentlichungstag und Bekanntmachung des Hinweises auf die Patenterteilung: **23.05.2007**
(21) Anmeldenummer: 03018107.7
(22) Anmeldetag: 08.08.2003
(51) Int. Cl.: A01C 1/08

(54) **Verfahren zur mobilen Feuchtbeizung auf der Sämaschine**
Method for mobile disinfecting using a liquid base on an agricultural seeder
Méthode pour la désinfection portable à base liquide dans un semoir agricole

(43) Veröffentlichungstag der Anmeldung: 09.02.2005
(73) Patentinhaber: Günther, Thomas P., 53173 Bonn (DE)
(72) Erfinder: Günther, Thomas P., 53173 Bonn (DE)
(74) Vertreter: Jönsson, Hans-Peter

(56) Entgegenhaltungen:
- DE-A- 3 333 435
- US-A- 1 409 564
- US-A- 3 848 772
- US-A- 4 023 525
- US-A1- 2002 104 262

## Beschreibung

Gegenstand der Erfindung ist ein Verfahren zur Behandlung von Saatgut landwirtschaftlicher Kulturpflanzen mit einem flüssigen Beizmittel in einer mobilen Beizanlage auf der Sämaschine unmittelbar vor Ablage in die Saatfurche.

Pflanzenschutzmittel, insbesondere Beizmittel, sind dazu bestimmt, Saatgut und/oder Pflanzen vor Schadorganismen oder nicht-parasitären Beeinträchtigungen zu schützen, Saatgut und/oder Pflanzen oder Pflanzenerzeugnisse vor Tieren, Pflanzen oder Mikroorganismen zu schützen, die nicht Schadorganismen sind, beispielsweise zur Verminderung von Vogelfraß, die Lebensvorgänge von Pflanzen, insbesondere während der Keimung günstig zu beeinflussen, ohne ihrer Ernährung zu dienen (Wachstumsregler), und/oder um ihre Eigenschaften oder Wirkungen zu verändern.

Ausgenommen sind Wasser, Düngemittel im Sinne des Deutschen Düngemittelgesetzes und Pflanzenstärkungsmittel. Als Pflanzenschutzmittel gelten auch Stoffe, die dazu bestimmt sind, Pflanzenerzeugnisse vor Schadorganismen zu schützen, das Keimen von Saatgut zu hemmen, Pflanzen abzutöten oder Flächen von Pflanzenwuchs freizumachen oder freizuhalten, ohne dass diese Stoffe unter die Obengenannten fallen.

Pflanzenschutzmittel gelangen in zubereiteter Form in den Handel, das heißt sie enthalten neben dem Wirkstoff üblicherweise Zusätze, die eine auf die jeweilige Anwendung optimal abgestimmte Ausbringung, Verteilung, Haftung und Wirksamkeit des Mittels ermöglichen sollen.

Im Sinne der Ackerbaukultur bezeichnet man mit Beizung das Verfahren der Behandlung des Saat- und Pflanzgutes mit einem zu dieser Verwendung entwickelten Pflanzenschutzmittel, das auch als Beizmittel bezeichnet wird. Die vorliegende Erfindung betrifft ausschließlich solche Beizmittel, die zum Zeitpunkt der Applikation in flüssiger Form vorliegen. Dieses Verfahren wird als Feuchtbeizung bezeichnet und ist geeignet für den Anbau aller landwirtschaftlicher Kulturpflanzen.

Die Feuchtbeizung von Saatgut ist im Stand der Technik weit verbreitet. Üblich ist die stationäre Behandlung unmittelbar im Anschluss an die Saatgutaufbereitung beim Saatguthersteller oder in speziellen Aufbereitungsstationen, Silobetrieben oder Lagerhäusern, die vor der Verpackung und dem Transport zu dem Landwirt vorgenommen wird.

So beschreibt die DE 36 16 010 A1 ein Verfahren zum Beizen und/oder Inkrustieren von Saatgutkörnern. Es wird ein Verfahren zum Beizen und/oder Inkrustieren von Saatgutkörnern mit flüssigen Beiz- und/oder Inkrustiermitteln auf wässeriger Basis bereitgestellt. Das Verfahren ist dadurch gekennzeichnet, dass man die Saatgutkörner mit einer wässerigen Beiz- und/oder Inkrustierflüssigkeit kurze Zeit behandelt und die so behandelten Saatgutkörner in einer pneumatischen Förderleitung sehr schnell trocknet. Hierbei ist die pneumatische Förderleitung vorzugsweise vertikal angeordnet, und es wird ein gegen die Schwerkraft fließender Luftstrom eingeblasen.

DE 199 57 378 A1 beschreibt die Behandlung von Saatgut und Pflanzen mit nützlichen Bakterien. Zur Behandlung von Pflanzen und/oder Saatgut wird ein Isolat von nützlichen Bakterien, vorzugsweise der Gattung Pseudomonas, vorzugsweise der Spezies Proradix, bereitgestellt und in einem Nährmedium inkubiert, das Phosphor- und Stickstoffverbindungen sowie Bernsteinsäure enthält. Die Lösung kann unmittelbar zum Besprühen von Pflanzen und/oder Saatgut verwendet werden, wobei wahlweise eine Vakuumbehandlung nachgeschaltet werden kann. Die Lösung kann ferner vakuumgetrocknet werden, wobei das Pulver vor der Anwendung in Wasser gelöst wird.

DE 32 25 008 C2 beschreibt ein Verfahren und Vorrichtung zum Saatgutbeizen, insbesondere Rapsbeizen. Im letzten Absatz der Beschreibung wird festgehalten, dass nach Durchgang durch einen Kegelmischer das fertiggebeizte Saatgut in eine Absackwaage gelangt und damit versandfertig ist.

DE 34 15 160 C2 beschreibt ein Behandlungsgerät für Saatgut, insbesondere Beizgerät. Dieses Gerät ist für die Trockenbeize sowie auch für eine Feuchtbeize geeignet.

In der DE 44 11 058 C2 wird eine Vorrichtung zum Beschichten von körnigem Gut beschrieben. Die Vorrichtung zum Beschichten von körnigem Gut, insbesondere zum Beschichten von Saatgut mit Chemikalien wie Beizmitteln, weist eine sich konisch nach oben erweiternde Seitenwand auf sowie einen um eine senkrechte Achse drehbar gelagerten und mit einem hochtourigen Drehantrieb verbundenen Mischzylinder sowie eine Aufgabevorrichtung für das körnige Gut in dem Mischzylinder und eine von oben in den Mischzylinder hineinragende, mit einem hochtourig anzutreibenden Zerstäuber ausgestattete Sprüheinrichtung zum Aufsprühen des flüssigen Beschichtungsmittels auf das im Mischzylinder befindliche körnige Gut. Die Vorrichtung ist dadurch gekennzeichnet, dass der konische Mischzylinder mit seinem oberen Ende in einen feststehenden zylindrischen Austragring ragt, der eine verschließbare Öffnung zum Austragen des beschichteten körnigen Gutes enthält, dass an der Innenwand des feststehenden zylindrischen Austragringes Ableitflügel befestigt sind, die mit ihrem unteren Ende über die Oberkante des konischen Mischzylinders in diesen hineinragen, und dass der Sprühkopf einen feststehenden Topf aufweist, an dessen Boden eine durch den Boden nach unten herausragende Sprüheinreichung gelagert ist, die einen hochtourig drehbaren, sich nach unten öffnenden Sprühkegel aufweist, auf dessen Außenseite eine mit ihm drehbare Sprühscheibe befestigt ist, unter der der Sprühkegel in seiner konischen Seitenwand eine Vielzahl von Bohrungen zum Versprühen und Vernebeln von Flüssigkeiten enthält.

Die US-A-2002/0 104 262 beschreibt ein ähnliches Verfahren, in dem das Saatgut ist im Behälter mit dem Beizmittel versprüht.

Da die Feuchtbeizen des Standes der Technik notwendigerweise eine mehr oder weniger große Menge an Wasser auf das Saatgut bringen, ist regelmäßig eine Trocknung des Saatgutes nach der Behandlung erforderlich. Diese Trocknung kann naturgemäß nur unter milden Temperaturbedingungen erfolgen, da anderenfalls das Saatgut leiden würde. Darüber hinaus sind die im Handel erhältlichen Maschinen zur Beizung von Saatgut üblicherweise so groß dimensioniert, dass sich eine Anschaffung für den, das Saatgut ausbringenden Landwirt in der Regel nicht lohnt.

Das Saatgut einiger Kulturpflanzen wie insbesondere Mais, Zuckerrübe oder Raps wird in spezialisierten stationären Beizanlagen in industriellem Maßstab erzeugt für einzelne europäische Klimaregionen, beziehungsweise Reifegruppen produziert. Der züchterische Fortschritt und die zunehmende Konzentration der Saatgutproduktion begünstigen tendenziell die Verwendung möglichst universal einsetzbarer Beizmittel.

Die großvolumige Behandlung von Saatgut erschwert naturgemäß die Berücksichtigung spezieller Wünsche des einen oder anderen Landwirtes oder spezieller Pflanzenschutz-Anforderungen, beispielsweise aufgrund eines regional begrenzten, über der Schadensschwelle liegenden Auftretens von Schadorganismen oder Auflaufkrankheiten.

Die- US- A - 1 409 564 beschreibt auch ein Verfahren zur Beizung von Saatgut, in dem das Saatgut unmittelbar vor der Ablage in die Saatfurche versprüht wird. Das Beizmittel wird hier auch über den Boden versprüht.

Die gesundheitliche Unversehrtheit von Personen, die mit gefährlichen Pflanzenschutzmitteln, insbesondere Beizmitteln, umgehen, ist grundsätzlich entsprechend dem Grad der Exposition gefährdet. Gesetzlich vorgeschriebene Schutzvorkehrungen und -maßnahmen sollen dieses Risiko weitgehend vermindern, in dem die Zeitspanne und/oder der Grad der Exposition verkleinert wird. Trotz dieser Verbesserungen kommt es in Einzelfällen immer wieder zu unerwünschten Reaktionen auf gefährliche Pflanzenschutz-, insbesondere Beizmittel in Form akuter oder chronischer gesundheitlicher Beschwerden. So kann beispielsweise bei der Aufbereitung von Saatgut oder dem Umsacken behandelten Saatgutes, zum Beispiel Mais, mit Thiram-haltigen Beizmitteln, wie zum Beispiel Tutan^{®}-Flüssigbeize, eine Sensibilisierung bzw. Reizung der Atemwege oder eine stellenweise Rötung der Haut verbunden mit starkem Juckreiz auftreten. In seltenen Fällen wurde auch von chronischen Beschwerden berichtet wie Schlaflosigkeit, Kopfschmerzen und Antriebsverlust. Die gesundheitlichen Beschwerden treten auf, in dem staubförmige Partikel des Wirkstoffes Thiram eingeatmet werden oder in Kontakt kommen mit der ungeschützten Haut.

Dementsprechend besteht die Aufgabe der vorliegenden Erfindung darin, die Nachteile des Standes der Technik zu überwinden.

Die vorliegende Aufgabe wird in einem ersten Ausführungsschritt gelöst durch ein Verfahren zur Beizung von Saatgut landwirtschaftlicher Kulturpflanzen mit einem Gewicht von bis zu 500 mg/Korn, mit den Merkmalen des Anspruchs 1.

Das oben beschriebene Gesundheitsrisiko kann erfindungsgemäß dadurch weitgehend ausgeschlossen werden, in dem die Beizung nicht stationär im Anschluss an die Saatgutaufbereitung erfolgt, sondern erst unmittelbar vor der Ausbringung des Saatgutes auf der Sämaschine. Das erfindungsgemäße Verfahren schließt die Gefährdung durch gefährliche Beizmittel insofern aus, als die Bildung von staubförmigen Partikeln weitgehend unterbunden wird. Die Aufnahme von staubförmigen Partikeln könnte allenfalls infolge nicht sachgemäßer Handhabung erfolgen, beispielsweise bei unterlassener Reinigung nach Gebrauch, so dass in den Zuführungsleitungen verbleibende Mittelreste eintrocknen und später als Staub freigesetzt werden könnten. Dieses Verfahren im Sinne des technischen Fortschritts ist bereits für die Behandlung von Pflanzgut erfolgreich in die Praxis umgesetzt worden. Hier wird das flüssige Beizmittel auf der Kartoffellegemaschine durch Vollkegeldüsen und neuerdings durch Hohlkegeldüsen auf die durch Schwerkraft vom Ladebehälter in die Pflanzfurche fallenden Pflanzkartoffeln appliziert.

Da Pflanzkartoffeln in der Regel unbehandelt in Verkehr gesetzt werden, bietet die Beizung auf der Legemaschine lediglich die Möglichkeit einer erstmaligen "Grundbeizung" im Unterschied zu dem Verfahren der vorliegenden Erfindung, das auch eine "Zusatzbeizung" ermöglicht, siehe unten. Dieses Verfahren der Beizung von Pflanzgut wie auf der Kartoffellegemaschine ist jedoch für die Behandlung von Saatgut im Sinne der vorliegenden Erfindung nicht geeignet. Denn im Unterschied zu Saatgut aller anderen in Europa verbreiteten Kulturpflanzen hat das Pflanzgut im Kartoffelbau eine wesentlich größere Masse mit beispielsweise 35 g pro Pflanzkartoffel. So wiegt beispielsweise Maissaatgut durchschnittlich 300 mg/Korn oder Weizensaatgut durchschnittlich 45 mg/Korn. Nur das relativ hohe Gewicht der Pflanzkartoffel ermöglicht eine ausreichend genaue Ablage in die Pflanzfurche ausschließlich durch Schwerkraftförderung. Saatgut im Sinne der vorliegenden Erfindung umfasst solches mit einem Gewicht von bis zu 500 mg/Korn.

Eine Übertragung des Kartoffelbeizverfahrens auf die Beizverfahren von Saatgut kommt auch deshalb nicht in Betracht, da immer höhere technische Anforderungen gestellt werden an die Arbeitsqualität der Saat, insbesondere exakte Ablage, Standgenauigkeit sowie Tiefenführung. So wird im Stand der Technik sowohl im Drill-, als auch im Einzelkornsaatverfahren das Saatgut auf dem Transport vom Saatkasten bis zur Ablage grundsätzlich aktiv gefördert. In der Regel geschieht dies in einem mit Druckluft unterstützten Verteil- und Zuleitungssystem.

Das Verfahren dient dem Schutz des Saatgutes und des Keimlings insbesondere vor Schädlingen, durch Schädlinge übertragene Krankheiten, Vogelfraß oder Auflaufkrankheiten, letztgenannte beispielsweise durch Behandlung mit einem Thiram-haltigen Beizmittel. Das Verfahren eignet sich sowohl zur "Grundbeizung", das heißt der erstmaligen Beizung unbehandelten Saatgutes, als auch für eine "Zusatzbeizung", das heißt der zusätzlichen Behandlung von zuvor bereits gebeiztem Saatgut, um die vorhandene Beizwirkung zu optimieren und/oder zusätzliche Eigenschaften oder Wirkungen hinzuzufügen.

Im Sinne vorliegender Erfindung bietet die mobile Feuchtbeizung auf der Sämaschine die Möglichkeit einer auf die regionalen Anforderungen jeweils abgestimmten Saatgutbehandlung. Diese kann grundsätzlich für unbehandeltes Saatgut aller Kulturpflanzen in Form einer "Grundbeizung", das heißt erstmaliger Saatgutbehandlung erfolgen, beispielsweise für Getreidearten oder Futterleguminosen. Darüber hinaus ist das Verfahren insbesondere im Sinne einer "Zusatzbeizung" von praktischer Bedeutung. Dies gilt insbesondere für Saatgut solcher Kulturpflanzen, die in der Regel als gebeiztes Saatgut in Verkehr gebracht werden, beispielsweise Mais, Raps und Zuckerrüben. Hier bietet die "Zusatzbeizung" die Möglichkeit, das Saatgut zusätzlich vor regional auftretenden Beeinträchtigungen zu schützen wie beispielsweise vor speziellen Schädlingen, durch Schädlinge übertragene Krankheiten, Auflaufkrankheiten oder Vogelfraß. So kann z.B. ein mit Maxim^{®} AP in Verkehr gesetzter Saatmais mit folgenden im Jahr 2003 vom Bundesamt für Verbraucherschutz und Lebensmittelsicherheit in Deutschland (Pflanzenschutzmittel-Verzeichnis, Teil 1, 2003, Hrsg. Bundesamt für Verbraucherschutz und Lebensmittelsicherheit) zugelassenen Beizmitteln durch das Verfahren der mobilen Feuchtbeizung auf der Sämaschine wie folgt optimiert werden.

### Ausführungsbeispiele:

**Anwendungsbeispiel 1: Mobile Feuchtbeizung von Saatmais**

| "Grundbeizung" des zertifizierten Saatgutes | "Zusatzbeizung" - optional - | Schadorganismus Zweckbestimmung |
|---|---|---|
| Maxim^{®} AP | | Auflaufkrankheiten |
| | Seedoxin^{®}FHL | Fritfliege, Vogelfraß durch Fasane |
| | Tutan^{®} Flüssigbeize* | Auflaufkrankheiten |
| | Gaucho^{®} 600 FS | Schnellkäfer (Drahtwurm), Fritfliege, Blattläuse (Frühbefall) |
| | Mesurol^{®} flüssig | Vogelfraß durch Fasane |
| | Combicoat^{®}CBS | Schnellkäfer (Drahtwurm), Fritfliege |

| | | |
|---|---|---|
| *Wirkstoff 500 g/l Thiram | | |

**Anwendungsbeispiel 2: Mobile Feuchtbeizung von Zuckerrüben**

| "Grundbeizung" des zertifizierten Saatgutes | "Zusatzbeizung" - optional - | Schadorganismus Zweckbestimmung |
|---|---|---|
| Aatiram^{®}* | | Auflaufkrankheiten |
| | Tachigaren^{®}70 W.P. | Pythium-Arten, Aphanomyces-Arten |
| Gaucho^{®} oder Scooter^{®} | | Moosknopfkäfer, Rübenfliege, Blattläuse als Virusvektoren |
| | Montur^{®} oder Akteur^{®} | Moosknopfkäfer, Blattläuse als Virusvektoren |
| | Imprimo^{®} | Moosknopfkäfer, Rübenfliege, Blattläuse als Virusvektoren, Schnellkäfer (Drahtwurm), Blattläuse |
| | Traffic^{®} | Moosknopfkäfer, Rübenfliege Blattläuse |
| | Komet^{®}RP | Moosknopfkäfer |
| | Dithane^{®}Ultra WP | Auflaufkrankheiten |

| | | |
|---|---|---|
| * Wirkstoff: 656,6 g/l Thiram | | |

Die Möglichkeit der Zusatzbeizung ist ein Beitrag zum Anwenderschutz durch den Ausschluss der anderenfalls möglicherweise zu einem späteren Zeitpunkt erforderlichen Spritzmittelbehandlung desselben Schadorganismus und/oder Krankheitsbildes.

Die Möglichkeit der Zusatzbeizung ist auch ein Beitrag zum Umweltschutz. Denn die Behandlung von Saatgut gilt als umweltverträglichste Maßnahme des Pflanzenschutzes durch Ausschluss der Möglichkeit des Eintrages eines oder mehrerer gefährlicher Wirkstoffe oder dessen/deren Abbauprodukte in die Luft oder in Oberflächengewässer, wie dies bei der sonst erfolgenden späteren Behandlung mit Spritzmitteln möglicherweise gegeben wäre. So könnte im obengenannten Anwendungsbeispiel 1 die Unterlassung der Zusatzbeizung mit Gaucho^{®}600 FS eine spätere Behandlung gegen Fritfliegen zur Folge haben. Dies würde dann mit Spritzmitteln wie beispielsweise "Karate^{®} mit Zeon^{®} Technologie" oder "Trafo^{®}WG" oder "Curaterr^{®}Granulat" erfolgen, die die Möglichkeit der Eintragung in Luft und, insbesondere durch Abdrift, in Oberflächengewässer mit sich bringen. Im obengenannten Anwendungsbeispiel 2 könnte die unterlassene Zusatzbeizung mit Gaucho^{®}, Scooter^{®}, Imprimo^{®} oder Traffic^{®} eine spätere Behandlung gegen Rübenfliegen zur Folge haben. Dies würde dann beispielsweise mit dem nach Gefahrstoffverordnung als giftig (Gefahrensymbol T) gekennzeichneten Spritzmittel Dimecron^{®}20 erfolgen mit möglicher Exposition des Anwenders sowie obengenannter Eintragungsmöglichkeit in die Luft und in Oberflächengewässer. Die Exposition in Oberflächengewässer könnte ausgeschlossen werden beispielsweise durch Verwendung des ebenfalls giftigen Streumittels Ultracid^{®}40.

Außerdem könnte die vorliegende Erfindung insgesamt zu einer Verringerung der zur Saatgutbehandlung verwendeten Pflanzenschutzmittel führen, wenn der zur Zeit bestehende Trend zu nur wenigen europaweit einheitlichen Universalbeizen mit vielen Wirkstoffen, nicht zuletzt aus Kostengründen, aufgegeben werden muss zugunsten der preiswerteren Alternative einer die wichtigsten Schädlinge bzw. Auflaufkrankheiten abdeckenden "Grundbeize" mit der Möglichkeit einer im Sinne des integrierten Pflanzenschutzes durchgeführten mobilen "Zusatzbeizung" bei erwarteter Überschreitung der jeweiligen Schadensschwelle bestimmter Schädlinge, durch Schädlinge übertragener Krankheiten, Auflaufkrankheiten oder Vogelfraß.

Die vorliegende Erfindung betrifft Saatgut von üblicherweise im Drillverfahren angebauten Kulturpflanzen, wie beispielsweise Getreide, Brassica-Arten wie beispielsweise Raps, Futterleguminosen wie beispielsweise Ackerbohne und Futtererbse sowie für Mais, insbesondere Silomais und Sonnenblumen.

Besonders bevorzugt im Sinne der vorliegenden Erfindung sind die üblicherweise im Einzelkornsaatverfahren angebauten Ackerbaukulturen wie Mais, insbesondere Körnermais und Zuckerrübe, insbesondere als pilliertes Saatgut sowie aufgrund der Standgenauigkeit in der Reihe der herkömmlich ausschließlich im Drillverfahren ausgebrachten Kulturpflanzen.

Wenn im Sinne der vorliegenden Erfindung ein flüssiges Beizmittel auf das Saatgut aufgebracht wird, so ist hier eine Zubereitung von einem oder mehreren Wirkstoffen zu verstehen. Diese liegt vor als Lösung, Emulsion, emulgierbares Konzentrat, Suspension und/oder ein Suspensionskonzentrat, insbesondere in einer verdünnten wässerigen Form.

Entsprechende Beizmittel auf dem hier vorliegenden Gebiet sind dem Fachmann grundsätzlich bekannt und umfassen beispielsweise Prelude^{®}WW, Landor^{®}C, Arena^{®}, Maxim^{®}AP, Rubin^{®}, Baytan^{®}universal Flüssigbeize, Legat^{®}, Gaucho^{®}600 FS, Dithane^{®}Ultra WP, Mesurol^{®}flüssig, Raxil^{®}S, Aatiram^{®}, Komet^{®}RP.

Pflanzenschutzmittel im Sinne der vorliegenden Erfindung umfassen Mittel zur Behandlung von Saatgut, auch als Beizmittel bezeichnet insbesondere, Fungizide zur Bekämpfung von Pilzen, Insektizide zur Bekämpfung von Insekten, Mittel zur Verminderung des Vogelfraßes, jeweils allein oder in Kombination untereinander.

Prinzipiell ist jede beliebige Fördertechnik zum Transport des Saatgutes vom Saatgutkasten bis zur Saatfurche geeignet. Besonders bevorzugt im Sinne der vorliegenden Erfindung wird das Saatgut mit dem flüssigen Beizmittel durch Spritz- oder Tauchbehandlung benetzt und besonders bevorzugt ohne zwischengeschaltete Trocknung mittels einer pneumatischen Förderleitung in die Saatfurche eingebracht.

So ist es beispielsweise möglich, dass die landwirtschaftliche Zugmaschine zur Anwendung des Verfahrens der mobilen Feuchtbeizung aufgrund der hohen Anzahl der erforderlichen Saatgutdosierorgane und -zuleitungen mit einem Fronttank arbeitet. Pneumatisch, gegebenenfalls hydraulisch geförderte Zuleitungen führen das Beizmittel in den zur Saatfurche gerichteten Teil der Saatgutzuleitung hinein, wo beispielsweise eine Tauchbehandlung erfolgt oder eine oder mehrere Spritzdüsen das herabfallende Saatgut innerhalb der Saatgutzuleitung kurz vor Ablage in die Saatfurche benetzen, so dass das Beizmittel in Kontakt mit dem Saatgut kommt.

Besonders bevorzugt im Sinne der vorliegenden Erfindung ist die Anwendung des Verfahrens zur erstmaligen oder zusätzlichen Behandlung von Saatgut gegen pilzliche Auflaufkrankheiten, insbesondere mit einem Thiram-haltigen Beizmittel.

## Patentansprüche

1. Verfahren zur Beizung von Saatgut landwirtschaftlicher Kulturpflanzen mit einem Gewicht von bis zu 500 mg/Korn, **dadurch gekennzeichnet, dass** man das Saatgut mit einem bei Raumtemperatur flüssigen Thiram-haltigen Beizmittel auf der Sämaschine unmittelbar vor der Ablage in die Saatfurche behandelt, und das behandelte Saatgut mit einer pneumatischen Förderleitung in die Saatfurche einbringt.

2. Verfahren nach Anspruch 1, **dadurch gekennzeichnet, dass** man Saatgut behandelt, das im Drillsaatverfahren ausgebracht wird, insbesondere Getreide, Brassica-Arten, insbesondere Raps, Futterleguminosen, insbesondere Ackerbohne oder Futtererbse, Silomais oder Sonnenblumen.

3. Verfahren nach Anspruch 1, **dadurch gekennzeichnet, dass** man Saatgut behandelt, das im Einzelkornsaatverfahren ausgebracht wird, insbesondere Zuckerrüben oder Körnermais.

4. Verfahren nach einem der Ansprüche 1 bis 3, **dadurch gekennzeichnet, dass** man als Beizmittel eine Zubereitung von einem oder mehreren Wirkstoffen einsetzt, die vorliegt als Lösung, Emulsion, emulgierbares Konzentrat, Suspension und/oder Suspensionskonzentrat, insbesondere in einer verdünnten wässerigen Form.

5. Verfahren nach einem der Ansprüche 1 bis 4, **dadurch gekennzeichnet, dass** die Zubereitung, Fungizide und/oder Insektizide und/oder Mittel zur Verminderung des Vogelfraßes umfasst.

6. Anwendung des Verfahrens nach einem der Ansprüche 1 bis 5 zur Behandlung von Saatgut gegen pilzliche Auflaufkrankheiten.

## Claims

1. A process for dressing the seeds of agricultural crops having a weight of up to 500 mg/grain, **characterized in that** the seeds are treated with a thiram-containing dressing agent that is liquid at room temperature on the sowing machine immediately before being placed into the seed furrow, and the thus treated seeds are inserted in the seed furrow by a pneumatic conveying line.

2. The process according to claim 1, **characterized in that** the seeds being treated are applied by a seed drill method, especially cereals, *Brassica* species, especially rapeseed, fodder legumes, especially faba beans or field peas, silage corn or sunflowers.

3. The process according to claim 1, **characterized in that** the seeds being treated are applied by a single grain seed method, especially sugar beets or grain maize.

4. The process according to any of claims 1 to 3, **characterized in that** a formulation of one or more active substances which is in the form of a solution, emulsion, emulsifiable concentrate, suspension and/or suspension concentrate, especially in a diluted aqueous form, is employed as said dressing agent.

5. The process according to any of claims 1 to 4, **characterized in that** said formulation comprises antifungal agents and/or insecticides and/or agents for reducing bird depredation.

6. Application of the process according to any of claims 1 to 5 for treating seeds against fungal seedling diseases.

## Revendications

1. Procédé pour l'enrobage de semences de plantes cultivées ayant un poids jusqu'à 500 mg/graine, **caractérisé en ce que** l'on traite les semences avec un agent d'enrobage liquide à la température ambiante et contenant du thiram, sur le semoir juste avant le placement dans le sillon de semences, et que l'on introduit les semences traitées dans le sillon de semis à l'aide d'un conduit de transport pneumatique.

2. Procédé selon la revendication 1, **caractérisé en ce que** l'on traite des semences qui sont épandues par ensemencement en ligne, notamment des céréales, des espèces de *Brassica,* notamment du colza, des légumineuses fourragères, notamment des féveroles ou des pois protéagineux, du maïs ensilage or des tournesols.

3. Procédé selon la revendication 1, **caractérisé en ce que** l'on traite des semences qui sont épandues par semis monograine, notamment des betteraves sucrières ou du maïs-grain.

4. Procédé selon l'une quelconque des revendications 1 à 3, **caractérisé en ce que** l'on utilise une préparation d'un ou plusieurs agents actifs sous forme de solution, émulsion, concentré émulsifiable, suspension et/ou concentré de suspension, notamment sous forme aqueuse diluée, en tant d'agent d'enrobage.

5. Procédé selon l'une quelconque des revendications 1 à 4, **caractérisé en ce que** ladite préparation comprend des fongicides et/ou insecticides et/ou agents pour réduire les dégâts d'oiseaux.

6. Application du procédé selon l'une quelconque des revendications 1 à 5 pour traiter des semences contre les maladies fongueuses des semis.
